# EUROPÄISCHE PATENTSCHRIFT

(11) **EP 0 265 918 B1**
(45) Veröffentlichungstag und Bekanntmachung des Hinweises auf die Patenterteilung: **13.01.1993**
(21) Anmeldenummer: 87115804.4
(22) Anmeldetag: 28.10.1987
(51) Int. Cl.: H04Q 11/04, H04B 10/00, H04J 15/00

(54) **Optisches Breitband-Nachrichtenübertragungssystem, insbesondere im Teilnehmeranschlussbereich**
Optical broad band communication transmission system, especially in the subscriber access area
Système optique de transmission de données large bande, en particulier pour la zone de raccordement d'abonnés

(30) Priorität: 31.10.1986 DE 3637097; 24.03.1987 DE 3709678
(43) Veröffentlichungstag der Anmeldung: 04.05.1988
(73) Patentinhaber: Alcatel SEL Aktiengesellschaft, D-70435 Stuttgart (DE); ALCATEL N.V., NL-1077 XX Amsterdam (NL)
(72) Erfinder: Küppers, Dieter, Dr., D-7000 Stuttgart 31 (DE); Herse, Klaus, D-7252 Weil der Stadt (DE); Hiepe-Wohlleben, Käte, D-7250 Leonberg (DE); Kaiser, Manfred, D-7253 Renningen (DE); Ohnsorge, Horst, Dr., D-7149 Freiberg/N. (DE); Mohr, Friedemann Dr., D-7253 Renningen (DE)
(74) Vertreter: Kugler, Hermann, Dipl.-Phys.

(56) Entgegenhaltungen:
- EP-A- 0 073 314
- US-A- 3 761 716
- US-A- 3 777 149
- US-A- 4 366 565
- US-A- 4 601 535
- OPTICS LETTERS, Band 11, Nr. 3, März 1986, Seiten 177-179, Optical Society of America, New York, US; J.N. BLAKE et al.: "Fiber-optic modal coupler using periodic microbending"
- NACHRICHTEN TECHNISCHE ZEITSCHRIFT, Band 39, Nr. 7, Juli 1986, Seiten 454-459, Berlin, DE; H.G. HAAG et al.: "Lichtwellenleiter und Lichtwellenleiterkabel"

## Beschreibung

Die Erfindung betrifft ein System nach dem Oberbegriff des Patentanspruchs 1. Ein solches System ist bekannt aus ntz, Bd. 39 (1986), Heft 7 S.484-489. In dieser Druckschrift wird die Auffassung vertreten, daß ein Monomode-Lichtwellenleiter, der im optischen Langwellenbereich von 1300 nm bis 1600 nm die geringsten Dämpfungen und die größten Bandbreiten aufweist, das geeignete Übertragungsmedium für alle optischen Breitband-Nachrichtenübertragungssysteme, auch für den Teilnehmeranschlußbereich ist, in dem die Teilnehmer sternförmig über Lichtwellenleiter mit der Ortsvermittlungsstelle verbunden sind.

Bekanntlich sind solche Monomode-Lichtwellenleiter nur für Wellenlängen oberhalb einer (vom Kerndurchmesser und den Brechzahlen von Kern und Mantel abhängigen) Grenzwellenlänge "monomodig", d. h. oberhalb dieser Grenzwellenlänge ist nur der Grundmodus ausbreitungsfähig. Dagegen sind bei Wellenlängen unterhalb dieser Grenzwellenlänge mehrere Moden ausbreitungsfähig. (ntz, Bd. 39 (1986), S. 454 bis 459).

In der erstgenannten Druckschrift ist ausgeführt, daß die optischen Sender und die optischen Empfänger auf den optischen Langwellenbereich (1300 nm bis 1600 nm) abgestimmt sein müssen, und daß große Anstrengungen unternommen werden müssen, um die kostengünstige Herstellung, die heutzutage noch nicht möglich ist, zu erreichen. Eine kostengünstige Lösung für die optische übertragung über Lichtwellenleiter im Teilnehmeranschlußbereich ist der Druckschrift nicht entnehmbar.

Auch in ntz, Bd. 39 (1986) Heft 7, S. 502 bis 508 wird die Auffassung vertreten, daß der Monomode-Lichtwellenleiter für den optischen Teilnehmeranschluß der geeignetste Lichtwellenleitertyp ist, daß jedoch die hohen Kosten für die hierfür notwendigen optisch-elektrischen Wandler der baldigen Einführung der optischen Breitband-Teilnehmeranschlüsse erheblich im Wege stehen.

Es ist daher Aufgabe der Erfindung, hier Abhilfe zu schaffen und ein System anzugeben, das insbesondere für Anwendungen im Teilnehmeranschlußbereich eine kostengünstige Lösung darstellt.

Die Aufgabe wird wie im Patentanspruch 1 angegeben gelöst. Weiterbildungen ergeben sich aus den Unteransprüchen.

Die Erfindung hat die folgenden Vorteile:
- Als optische Sender und optische Empfänger werden Halbleiter-Bauelemente verwendet, die bereits heutzutage zu geringen Kosten zur Verfügung stehen. Damit ist das größte Hinderniss auf dem Weg zu einem kostengünstigen optischen Teilnehmeranschluß ausgeräumt.
- Als Übertragungsmedium wird der Lichtwellenleiter-Typ verwendet, der sich zur Anwendung für den Weitverkehr durchgesetzt hat und der im Wellenlängenbereich von 1300 bis 1600 nm die niedrigste Dämpfung und Dispersion hat, d. h. der für den Weitverkehr und für solche Wellenlängen tatsächlich heute der optimale Lichtwellenleiter-Typ ist. Die Beibehaltung dieses Typs erspart die Kosten zur Entwicklung eines für den Teilnehmeranschlußbereich speziell ausgelegten Lichtwellenleiters und macht, da bei Anwendung im Teilnehmeranschlußbereich wegen der Vielzahl von Teilnehmeranschlüssen insgesamt erheblich größere Mengen produziert werden müssen als bei einer ausschließlichen Anwendung für den Weitverkehr, eine wirtschaftliche Produktion dieses Typs von Lichtwellenleitern überhaupt erst möglich.
- Die erfindungsgemäße Ankopplung des Lichtwellenleiters an den Laser ist eine äußerst einfache Lösung des in der Literatur ntz Bd. 39 (1986), Heft 7, S. 502 bis S. 508 dargestellten Ankoppelproblems, das für Anwendungen im Teilnehmeranschlußbereich zwar geringer ist als für Weitverkehrsanwendungen, jedoch trotzdem als noch ungelöstes Problem dargestellt ist.
- Die erfindungsgemäße Ankopplung des Lichtwellenleiters an den Laser mittels eines Klebers hat gegenüber einer Ankopplungsoptik, bei der das Laserlicht in die Luft austreten würde, den Vorteil, daß der Abstrahlwinkel, unter dem das Laserlicht aus dem Laser austritt, verringert ist, da der Kleber einen höheren Brechungsindex als Luft hat. Somit bewirkt auch der Kleber eine gewisse Fokussierung. Die Ankopplung mittels eines Klebers hat außerdem den Vorteil, daß Mantellicht, das entweder durch Rückstreuung oder durch Reflexionen innerhalb der optischen Übertragungsstrecke vom Lichtwellenleiter zum Laser zurückgeleitet wird, nicht in den Laser zurückgelangt und dessen Eigenschaften verschlechtert, wie dies bei der Verwendung einer Linse zur Einkopplung des Laserlichts in den Lichtwellenleiter der Fall wäre.
- Die Erfindung ist auch auf ein bidirektionales Wellenlängenmultiplex-Übertragungssystem anwendbar, da es sich gezeigt hat, daß die dort üblicherweise zur Richtungstrennung und Wellenlängentrennung verwendeten Faserschmelzkoppler die Stabilität des übertragenen Grundmodus nicht beeinträchtigen, vielmehr haben diese Koppler sogar die Wirkung, daß sie höhere Moden unterdrücken würden, falls irgendwo auf der Übertragungsstrecke solche entstehen würden.
- Erfindungsgemäß können auch zwei optische Signale mit derselben Wellenlänge, jedoch mit unterschiedlichen Moden über den Lichtwellenleiter übertragen werden. Dies erspart die erheblichen Kosten, die bei Verwendung von unterschiedlichen Wellenlängen entstehen würden.

Die Erfindung wird nun anhand der Zeichnungen beispielsweise näher erläutert. Es zeigen:
- Fig. 1: das Grundprinzip der erfindungsgemäßen Kombination von elektro-optischen Wandlern mit einem Monomode-Lichtwellenleiter,
- Fig. 2: eine Ausführungsform der Ankopplung des Lasers an den Lichtwellenleiter,
- Fig. 3: eine Anwendung der Erfindung auf ein bidirektionales optisches Wellenlängenmultiplex-Nachrichtenübertragungssystem.
- Fig. 4: ein erfindungsgemäßes bidirektionales Duplex-Nachrichtenübertragungssystem und
- Fig. 5: ein erfindungsgemäßes unidirektionales Duplex-Nachrichtenübertragungssystem und
- Fig. 6: eine Ausführungsform eines Modenfilters.

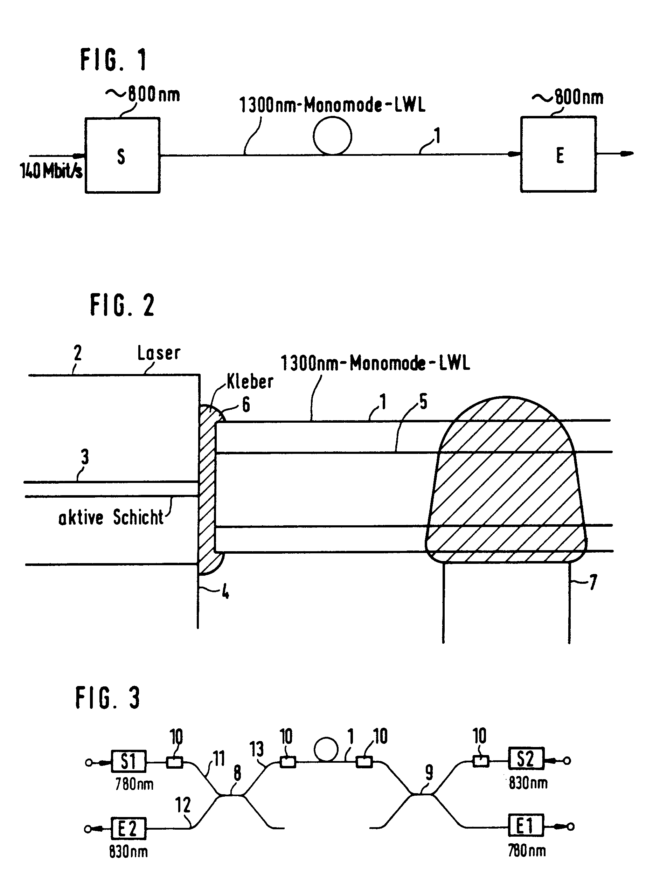

Wie bei jedem optischen Übertragungssystem ist auch bei dem erfindungsgemäßen System nach Fig. 1 ein optischer Sender S, auch elektrisch-optischer Wandler genannt, über einen Lichtwellenleiter 1 als Übertragungsmedium mit einem optischen Empfänger E, auch optisch-elektrischer Wandler genannt, verbunden. Das Neue an diesem System liegt darin, daß ein sogenannter 1300 nm-Monomode-Lichtwellenleiter mit einem optischen Sender und einem optischen Empfänger kombiniert ist, deren Betriebswellenlänge im Bereich von 800 nm und somit deutlich unterhalb der Grenzwellenlänge des für eine Übertragung im Bereich von 1300 nm bis 1600 nm vorgesehenen Monomode-Lichtwellenleiters liegt. Ein Monomode-Betrieb ist notwendig, um digitale Signale mit einer hohen Bitfolgefrequenz, z. B. von 140 Mbit/s, fehlerfrei übertragen zu können. Würde sich das Licht über den Lichtwellenleiter in mehreren Moden ausbreiten, so wäre dies wegen der bekannten Wirkung der Modendispersion nicht möglich.

Gemäß der Erfindung ist der notwendige Monomode-Betrieb dadurch erreicht, daß das Licht derart in den Lichtwellenleiter eingekoppelt wird, daß nur ein einziger Modus angeregt wird und höhere Moden, die wegen der unterhalb der Grenzwellenlänge des Lichtwellenleiters liegenden Betriebswellenlänge des Lasers auch ausbreitungsfähig wären, erst gar nicht entstehen. Als optischer Sender S werden bei 800 nm arbeitende Laser, basierend auf dem Material GaAlAs, und als Empfänger Photodioden, basierend auf dem Material Si, verwendet, die in ihren Eigenschaften genauestens bekannt und die billigsten zur Zeit erhältlichen Sende- und Empfangskomponenten sind.
So werden GaAlAs-Laser mit der Wellenlänge von 780 nm in Stückzahlen von Millionen produziert und in CD-Plattenspielern eingesetzt.

Da der Monomode-Lichtwellenleiter 1 bei der Betriebswellenlänge von 780 nm eine Dämpfung von etwa 2,5 dB/km besitzt, während die Dämpfungen bei 1300 nm und 1550 nm bei 0,4 dB/km bzw. bei 0,2 dB/km liegen, ist zwar die Dämpfung des neuen Systems gegenüber dem in der Literatur vorgeschlagenen bei 1300 oder 1500 nm arbeitenden System erhöht, jedoch kann diese Dämpfungserhöhung für Anwendungen im Teilnehmeranschlußbereich, wo die Länge der Übertragungsstrecke von der Ortsvermittlungsstelle bis zum Teilnehmer höchstens 12 km beträgt, in 95 % der Fälle höchstens 6 km, ohne weiteres hingenommen werden, da wegen der Sendeleistung des Senders und der Empfindlichkeit des Empfängers genügend Reserve zur Verfügung steht. Für sämtliche Anwendungen, bei denen eine solche Dämpfung hingenommen werden kann, also nicht nur für Anwendungen im Teilnehmeranschlußbereich, ist die Erfindung die geeignete Lösung.

Um den Monomode-Betrieb bei einer Wellenlänge, bei der auch ein Multimode-Betrieb möglich wäre, zu erreichen kommt es entscheidend auf die Ankopplung zwischen dem Laser und dem Lichtwellenleiter, im folgenden mit LWL abgekürzt, an, denn erstens soll möglichst nur ein Modus, vorzugsweise der Grundmode LP₀₁ angeregt werden und zweitens muß die Ankopplung zeitlich konstant und unempfindlich gegenüber Temperaturschwankungen sein. Verschiebt sich nämlich die Ankopplung, so wird auch der nächsthöhere Modus LP₁₁ angeregt und der notwendige Monomode-Betrieb damit in unzulässiger Weise beeinträchtigt.

Die erfindungsgemäße Ankopplung eines Lasers an einen Monomode-LWL wird nun anhand von Fig. 2 erläutert. Die Fig. 2 zeigt einen Laser 2 mit einer aktiven Schicht 3, der auf einer Unterlage 4 befestigt ist. Der Monomode-LWL 1, dessen Kern mit dem Bezugszeichen 5 bezeichnet ist, ist relativ zum Laser 2 so angeordnet, daß seine Endfläche, in die der Laser einstrahlen soll, möglichst nahe an die lichtemittierende Fläche des Lasers 2 heranreicht. Der LWL ist eine sogenannte Anschlußleitung, auch "Faserschwanz" genannt und hat eine Länge von ungefähr 1 m. Das dem Laser 2 zugewandte Ende des LWL ist so justiert, daß das am Ende seiner Länge von 1 m zu beobachtende Nahfeld genau die Intensitätsverteilung zeigt, die der Intensitätsverteilung des Grundmodus LP₀₁ entspricht. Zum Justieren ist ein Verschiebetisch einsetzbar, mit dem der LWL hochgenau in allen drei Koordinatenrichtungen verschiebbar ist.

Vor dem Justieren wird ein Kleber 6 auf die Fläche des Lasers 2 aufgebracht, an die der LWL angekoppelt wird, und nach dem Justieren wird dieser Kleber durch UV-Bestrahlung ausgehärtet. Beim Kleben wird darauf geachtet, daß die angeklebte Endfläche des LWL vom Laser einen Abstand von ungefähr 20 um hat. Ein geringerer Abstand kann bewirken, daß der LWL in Kontakt mit der lichtemittierenden Fläche des Lasers kommt und diese beschädigt, und ein größerer Abstand verschlechtert den Einkoppelwirkungsgrad. Um die Klebverbindung der LWL-Endfläche mit der Laserfläche zu stabilisieren, ist der LWL in geringem Abstand vom Laser auf eine Stütze 7 aufgeklebt. Die Stabilität der Einkopplung ist für die Sicherstellung des Monomode-Betriebs von fundamentaler Bedeutung. Eine geringfügige Veränderung der Einkopplung in Form einer Verschiebung der Faser bereits um eine Länge von 0,1 um würde sofort zur Anregung des unerwünschten nächsthöheren Modus LP₁₁ führen.

Die durch das beschriebene Ankleben erhaltene Einkopplung hat sich in Versuchen als außerordentlich robust erwiesen. Sie war stabil gegen Vibrationen und zeigte keine Veränderungen im Laufe der Zeit. Aufgrund der Klebereigenschaften ist auch über einen Zeitraum von Jahren eine Änderung der Ankopplung nicht zu erwarten. Als Kleber wird ein handelsüblicher Optik-Kleber verwendet, der vom Hersteller wegen seiner guten dauerhaften Eigenschaften z. B. zum Spleißen von Lichtwellenleitern empfohlen wird. Günstige Eigenschaften dieses Klebers sind z. B. sein Brechungsindex von 1,56 und seine Temperaturbelastbarkeit auf Dauer von - 80° C bis + 90° C.

Nachdem vorstehend die Art der Ankopplung des Lasers an den LWL beschrieben wurde, wird nun auf die Eigenschaften des damit aufgebauten Systems nach Fig. 1 eingegangen. Der CD-Laser HL 7801 mit der Betriebswellenlänge von 780 nm des Herstellers Hitachi hat die Eigenschaft, daß er unter Ansteuerung mit hochfrequenten Signalen mehrmodig wird. Die entstehenden Moden sind longitudinale Moden, die die Form des Abstrahlungslichtkegels, in dem der Grundmodus abgestrahlt wird, nicht wesentlich beeinflussen. Damit bleibt die Anregung des Grundmodus als einzigem Modus unabhängig davon, ob der Laser unmoduliert ist oder mit einem hochfrequenten Signal moduliert ist. In jedem Falle wurde eine einmodige Lichtausbreitung im LWL beobachtet. Die im abgestrahlten Licht des Lasers bei Modulation mit einem hochfrequenten Signal vorhandenen höheren Moden führen dazu, daß die Linienbreite des abgestrahlten Lichts vergrößert wird. Dies bedeutet, daß aufgrund der Materialdispersion des LWL die Lichtimpulse des übertragenen optischen Signals eine vergrößerte Laufzeitverzerrung erfahren. Diese kann jedoch ohne erhebliche Beeinträchtigung der Übertragungsqualität hingenommen werden, wenn die Länge der LWL-Übertragungsstrecke nur wenige Kilometer beträgt, wie dies bei Teilnehmeranschlußleitungen der Fall ist.

Ein Experiment hat gezeigt, daß Digitalsignale mit einer Bitfolgefrequenz von 34 Mbit/s über eine Übertragungsstrecke der beschriebenen Art bei ausreichender Qualität der Übertragung über eine Länge von 12 Kilometer übertragen werden können. Auch nach 12 km waren noch keine beobachtbaren Anteile des höheren Modus LP₁₁ entstanden.

Es ist durchaus überraschend, daß der angeregte Grundmodus bei der Ausbreitung über die Faserlänge stabil bleibt und nicht sich in höhere Moden transformiert. Dies war nicht unbedingt zu erwarten, denn es gibt in der Literatur keine Gleichung, mit deren Hilfe es möglich gewesen wäre, die Koppellänge vorauszusagen, d. h. die Länge, nach welcher die Lichtenergie, die zunächst in nur einem einzigen Mode eingekoppelt wird, sich gleichmäßig auf die im LWL möglichen Moden LP₀₁ und LP₁₁ verteilt. Die Stabilität des Grundmodus im Monomode-LWL hängt vermutlich damit zusammen, daß sich der Grundmodus LP₀₁ vom nächst höheren Modus LP₁₁ hinsichtlich der räumlichen Energieverteilung sehr stark unterscheidet.

In optischen Übertragungssystemen werden üblicherweise Stecker und Spleiße verwendet. Beispielsweise wird die an den Laser angeklebte Anschlußfaser mittels eines Steckers mit dem als Übertragungsmedium verwendeten LWL verbunden, entsprechend ist dies auf der Empfangsseite bei dem optischen Empfänger E. Für die Realisierbarkeit des erfindungsgemäßen Systems war es entscheidend, nachzuweisen, daß weder an Steckern noch an Spleißen der angeregte Grundmodus in einen oder mehrere höhere Moden übergeht. Überraschenderweise erwies sich auch hier der Grundmodus als äußerst stabil, und es wurde keine Verschlechterung der Übertragungseigenschaften bei Einfügung von Steckern und Spleißen in die Übertragungsstrecke festgestellt, falls Stecker mit Dämpfungen mit weniger als 1 dB verwendet wurden und die Spleiße fachmännisch ausgeführt wurden.

Zu dem oben erwähnten Kleber 6 für die stabile Ankopplung des Lasers an den LWL ist noch auf zwei vorteilhafte Eigenschaften hinzuweisen:
Der Brechungsindex von 1,56 des Klebers ist zur Anpassung des Brechungsindex der aktiven Schicht 3 des Lasers 2, der im Bereich 3 bis 5 liegt, an den Brechungsindex des Kerns 5 des LWL 1 von 1,45 besser geeignet als Luft mit einem Brechungsindex von 1. Der gegenüber Luft höhere Brechungsindex des Klebers sorgt dafür, daß das Laserlicht unter einem geringeren Winkel abgestrahlt wird und in den Kern des LWL gelangt, als dies der Fall wäre, wenn der Zwischenraum zwischen dem Laser und dem LWL ein Luftspalt wäre. Der Kleber hat somit eine Fokussierungswirkung und erhöht damit den Einkopplungswirkungsgrad.

Die zweite vorteilhafte Eigenschaft ist die folgende: Die gezeigte Laser-LWL-Ankopplung nach Fig. 2 hat zwar eine Einkoppeldämpfung von 6 dB, wogegen eine Einkopplung über eine Linse eine weitaus geringere Dämpfung von nur 3 dB hätte. Jedoch hat gerade diese erhöhte Einkoppeldämpfung den Vorteil, daß Mantellicht, das aus dem LWL infolge von Reflexionen an Steckern oder durch die Rayleigh-Streuung innerhalb des LWL in Richtung zum Laser zurückgestrahlt wird, keine nachteiligen Rückwirkungseffekte auf den Laser hat. Gerade die Lichtstreuung ist bei der Wellenlänge von 800 nm weitaus intensiver als sie bei 1300 nm und 1500 nm wäre. Bei Verwendung einer Linse zur Laser-LWL-Ankopplung würde auch das aus dem LWL in Richtung zum Laser zurückgestreute Mantellicht auf den Laser fokussiert und sich bei den Lasereigenschaften sehr störend bemerkbar machen, indem Linienverschmälerungen, Frequenz- und Intensitätssprünge auftreten würden. Dagegen hat die Anklebung nach Fig. 2 die vorteilhafte Wirkung, daß viel weniger Licht in den Laser zurückgestrahlt wird, als wenn eine Linse vorhanden wäre.

Für den Einsatz des erfindungsgemäßen Systems im Teilnehmeranschlußbereich ist es wünschenswert, daß die Übertragung in den beiden Richtungen über einen einzigen LWL erfolgt. Es hat sich gezeigt, daß auch der bidirektionale Betrieb im Wellenlängenmultiplex über eine LWL-Übertragungsstrecke, die in bekannter Weise Faserschmelzkoppler zur wellenlängenselektiven Richtungstrennung aufweist, gemäß dem Prinzip der Erfindung möglich ist.

Die Fig. 3 zeigt ein solches System zur bidirektionalen optischen Übertragung mit verschiedenen Wellenlängen. Für die eine Übertragungsrichtung von einem Sender S1 zu einem optischen Empfänger E1 wird eine Wellenlänge von 780 nm verwendet und für die Gegenrichtung von einem Sender S2 zu einem Empfänger E2 eine Wellenlänge von 830 nm.

Zur Trennung der beiden Übertragungsrichtungen sind auf beiden Seiten der Übertragungsstrecke wellenlängenselektive Richtkoppler 8 und 9 in Form von an sich bekannten Faserschmelzkopplern vorhanden. Das Übertragungsmedium ist wie bei Fig. 1 ein Monomode-LWL 1, der eine Grenzwellenlänge knapp unter 1300 nm hat und der ebenso wie der LWL beim System nach Fig. 1 deutlich unterhalb dieser Grenzwellenlänge betrieben wird.

Mit den Bezugszeichen 10 sind LWL-Stecker bezeichnet, welche die Enden der Faserschmelzkoppler mit Laser-Anschlußfasern bzw. mit dem Lichtwellenleiter 1 verbinden.

Überraschenderweise hat es sich gezeigt, daß Licht der Wellenlänge 780 nm, das im Grundmodus in den Anschluß 11 des Kopplers 8 eingekoppelt wird, auch in reiner Form in diesem Modus am Anschluß 13 des Kopplers austritt, und daß Licht mit der Wellenlänge 830 nm, das ebenso im Grundmodus in den Anschluß 13 des Kopplers 8 eingekoppelt wird, in reiner Form in diesem Modus am Anschluß 12 erscheint, entsprechendes gilt für den Koppler 9. In anderen Worten: ein Monomode-Betrieb im Multimode-Bereich eines Monomode-LWL ist mit bekannten Kopplern auch im bidirektionalen Wellenlängenmultiplex möglich. Es wurde sogar festgestellt, daß die Faserschmelzkoppler höhere Moden unterdrücken, falls solche irgendwo auf der Übertragungsstrecke entstehen oder durch ungenaue Ankopplung angeregt werden sollten.

Gemäß Fig. 3 läßt sich also ein kostengünstiger bidirektionaler optischer Breitband-Teilnehmeranschluß mit einem einzigen Lichtwellenleiter realisieren. Ein System nach Fig. 3 mit einer Länge von 5,5 km wurde bei einer Bitfolgefrequenz von 140 Mbit/s im bidirektionalen Betrieb mit den beiden angegebenen Wellenlängen getestet und es wurde stabil eine Bitfehlerhäufigkeit von 10⁻⁹ erreicht.

In den Rahmen der Erfindung gehören auch solche Systeme bei denen neben dem Grundmodus in stark verringertem, jedoch noch beobachtbarem Maße auch höhere Moden angeregt und übertragen werden und diese durch geeignete Modenfilter, z. B. die erwähnten Faserschmelzkoppler, am Ende der Übertragungsstrecke, bevor das Licht auf den optisch-elektrischen Wandler trifft, unterdrückt werden. Denn auch solche Systeme machen von dem Prinzip der Erfindung Gebrauch, einen Monomode-Wellenleiter entgegen der für ihn typischen Anwendung nicht in seinem Monomode-Wellenlängenbereich sondern in seinem Multimode-Wellenlängenbereich zu verwenden und trotzdem einen Monomode-Betrieb zu erreichen.

Eine der Fig. 2 entsprechende Ankopplung ist auch zwischen dem LWL und der empfangsseitigen Photodiode möglich, sowohl bei Systemen nach der vorliegenden Erfindung als auch bei beliebigen anderen Systemen.

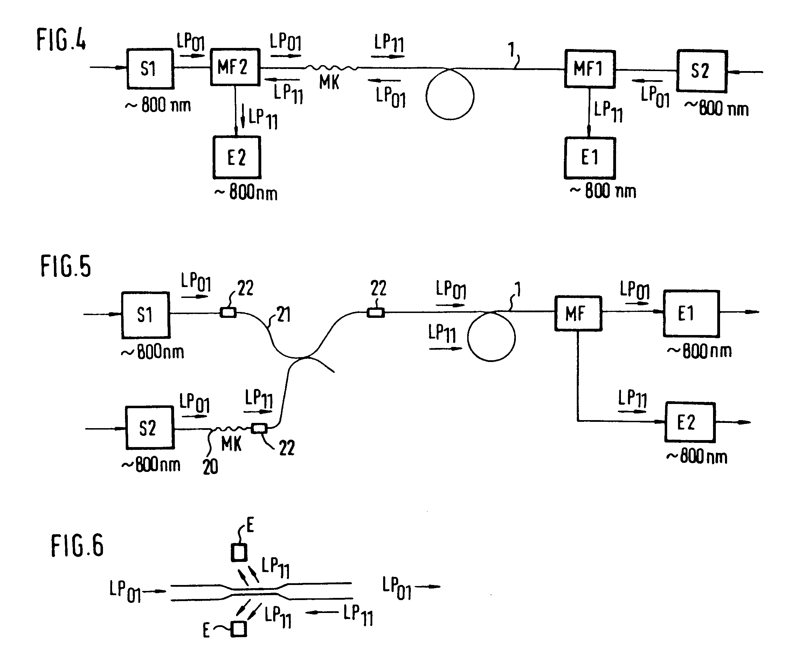

Im folgenden wird anhand der Fig. 4 und 5 eine Weiterbildung der Erfindung beschrieben, die es gestattet, zwei optischen Signale in jeweils einem einzigen Modus über den Lichtwellenleiter zu übertragen, wobei nur eine einzige Wellenlänge verwendet ist, die gemäß dem vorstehend erläuterten Prinzip der Erfindung unterhalb der Grenzwellenlänge des Lichtwellenleiters liegt.

Die Fig. 4 zeigt ein bidirektionales optisches Nachrichtenübertragungssystem mit einem einzigen Lichtwellenleiter 1 als Übertragungsmedium, wobei im Gegensatz zu dem System nach Fig. 3 die in den beiden Richtungen zu übertragenden optischen Signale dieselbe Wellenlänge haben. An jedes Ende des Lichtwellenleiters 1 ist ein Halbleiterlaser S1 bzw. S2 angekoppelt. Diese beiden optischen Sender arbeiten mit derselben Wellenlänge, die in Bezug auf den Lichtwellenleiter 1 so gewählt ist, daß nur der Grundmodus LP₀₁ und der nächsthöhere Modus LP₁₁ in dem Lichtwellenleiter 1 ausbreitungsfähig sind. Hinsichtlich der Ankopplung der beiden optischen Sender an den Lichtwellenleiter 1 gilt das oben im Zusammenhang mit der Fig. 1 gesagte, nämlich daß die Ankopplung so beschaffen ist, daß das optische Ausgangssignal des optischen Senders nur im Grundmodus LP₀₁ in den Lichtwellenleiter 1 eingekoppelt wird.

In den Lichtwellenleiter 1 sind an beiden Endstellen Modenfilter MF1 und MF2 jeweils nahe bei den Sendern eingefügt. Diese Modenfilter beeinflussen ein im Grundmodus geführtes optisches Signal nicht. Irgendwo auf der Übertragungsstrecke zwischen den beiden Modenfiltern, zweckmäßigerweise ebenfalls im Bereich einer Endstelle, im Ausführungsbeispiel der Fig. 1 in der Nähe des Senders S1, ist ein Modenkoppler MK in den Lichtwellenleiter eingefügt, der die Eigenschaft hat, daß er ein im Grundmodus LP₀₁ geführtes optisches Signal in den nächsthöheren Modus LP₁₁ umwandelt, und dies in jeder der beiden Übertragungsrichtungen. Ein hierfür geeigneter Modenkoppler ist beschrieben in "Optics Letters", March 1986, Vol. 11, No. 3, S. 177 bis 179.

Das vom Sender S1 in den Lichtwellenleiter eingestrahlte optische Signal wird also bis zum Modenkoppler MK im Grundmodus LP₀₁ geführt und von dort ab im nächsthöheren Modus LP₁₁ bis zum Modenfilter MF1 weitergeleitet. In der Gegenrichtung wird in entsprechender Weise das vom Sender S2 in den Lichtwellenleiter eingekoppelte optische Signal bis zum Modenkoppler MK im Grundmodus LP₀₁ bis zum Modenfilter MF2 geführt und von dort ab in dem nächsthöheren Modus LP₁₁ weitergeleitet. Jedes der beiden Modenfilter MF1 und MF2 koppelt nun das im höheren Modus LP₁₁ bis zum Modenfilter MF2 übertragene optische Signal aus dem Lichtwellenleiter aus und gibt es auf den zugehörigen optischen Empfänger E1 bzw. E2. Somit empfängt der Empfänger E1 das vom Sender S1 ausgesendete optische Signal, und an jedem Punkt der Übertragungsstrecke ist dafür gesorgt, daß die beiden vorhandenen optischen Signale unterschiedliche Moden haben.

Eine Überkopplung von Anteilen des einen Signals in das andere Signal findet nicht statt, da, wie oben erwähnt, die beiden Moden LP₀₁ und LP₁₁ hinsichtlich ihrer räumlichen Energieverteilung über den Querschnitt des Lichtwellenleiters 1 sich sehr stark voneinander unterscheiden. Jeder der beiden Moden hat also eine hohe Stabilität.

Würde sich ein geringer Teil eines übertragenen Signals in den anderen Modus umwandeln, so würde dies nur einen entsprechenden Leistungsverlust bedeuten. Der umgewandelte Teil würde nirgends auf einen Empfänger treffen und daher in keiner Weise eine Signalübertragung stören.

Das System nach Fig. 4 kann als bidirektionales Modenmultiplex-System bezeichnet werden, das wegen der einheitlichen Sender und der einheitlichen Empfänger einem bidirektionalen Wellenlängenmultiplexsystem hinsichtlich Kosten überlegen ist und im übrigen alle im Zusammenhang mit dem System nach Fig. 1 angeführten Vorteile aufweist.

Die zur Auskopplung des im höheren Modus LP₁₁ vorliegenden optischen Signals auf den Empfänger vorgesehenen Modenfilter MF1 und MF2 sind im einfachsten Fall das in Fig. 6 gezeigte Lichtwellenleiterstück mit verringertem Durchmesser und entfernter Kunststoffbeschichtung, das bisweilen auch als "Taper" bezeichnet wird. Im Bereich des verengten Querschnitts ist nur der Grundmodus LP₀₁ ausbreitungsfähig, so daß das im höheren Modus LP₁₁ vorliegende andere optische Signal von diesem Bereich in die Umgebung abgestrahlt wird und einen in der Umgebung angeordneten optischen Empfänger E erreicht. Der Bereich des Lichtwellenleiterstücks mit dem verengten Querschnitt ist zweckmäßigerweise in ein Medium eingebettet, das die Oberfläche des Lichtwellenleiterstücks schützt und die aus dem verengten Bereich austretende Strahlung auf den optischen Empfänger E fokussiert.

Ein anderer Typ eines Modenfilters, das einen Koppler enthält, ist bekannt aus "Optics Letters", Vol. 11, No. 9, Sept. 1986, Seiten 581 bis 583.

Die Fig. 5 zeigt ein optisches Nachrichtenübertragungssystem mit einem Lichtwellenleiter 1, das für einen unidirektionalen Betrieb zur Übertragung von zwei optischen Signalen bei einer einzigen Betriebswellenlänge vorgesehen ist.

In diesem Falle sind die beiden Halbleiterlaser als optische Sender S1 und S2 an das eine Ende des Lichtwellenleiters 1 und die zugehörigen optischen Empfänger E1 und E2 an das andere Ende des Lichtwellenleiters 1 angekoppelt. Für die Betriebswellenlängen der Sender und Empfänger im Verhältnis zur Übertragungseigenschaft des Lichtwellenleiters 1 gelten die gleichen Voraussetzungen wie bei dem bidirektionalen System nach Fig. 1.

Der optische Sender S1 koppelt sein optisches Ausgangssignal im Grundmodus LP₀₁ über einen Faserschmelzkoppler 21 in den Lichtwellenleiter 1 ein, und dieses Signal durchläuft in diesem Grundmodus den Lichtwellenleiter und ein in ihn eingefügtes Modenfilter MF unverändert bis zu einem optischen Empfänger E₁. Der zweite optische Sender S2 koppelt sein optisches Ausgangssignal ebenfalls im Grundmodus LP₀₁ in ein Faser-Anschlußstück 20 ein, das über den Koppler 21 an den Lichtwellenleiter 1 angekoppelt ist. Dieses Faserstück 20 enthält einen Modenkoppler MK, der den Grundmodus LP₀₁ in den nächsthöheren Modus LP₁₁ umwandelt, so daß dieses optische Signal in dem höheren Modus den Lichtwellenleiter 1 durchläuft, bis es in dem Modenfilter MF aus dem Lichtwellenleiter 1 ausgekoppelt wird und den optischen Empfänger E2 erreicht. Mit den Bezugszeichen 22 sind Lichtwellenleiter-Stecker bezeichnet, welche die Enden des Faserschmelzkopplers 21 mit Lichtwellenleiter-Anschlußstücken bzw. mit dem Lichtwellenleiter 1 verbinden. Der Modenkoppler kann bei Fig. 4 und Fig. 5 durch Verwendung von Steckern oder Spleißen in den Lichtwellenleiter eingefügt werden.

Sicherzustellen ist bei diesem System, daß keine unerwünschte Modenumwandlung stattfindet, da ansonsten einer der Empfänger ein nicht für ihn bestimmtes optisches Signal empfangen könnte.

Beiden Systemen nach Fig. 4 und 5 ist das Grundprinzip der Erfindung gemeinsam, daß für jedes der übertragenen optischen Signale eine Übertragung in einem einzigen Modus stattfindet, obwohl bei der gewählten Betriebswellenlänge auch ein zweiter Modus ausbreitungsfähig wäre.

## Patentansprüche

1. Optisches Breitband-Nachrichtenübertragungssystem, insbesondere für den Teilnehmeranschlußbereich, mit mindestens einem optischen Sender, mindenstens einem optischen Empfänger und einem Lichtwellenleiter, in dem oberhalb einer Grenzwellenlänge, z. B. 1280 nm, nur der Grundmodus ausbreitungsfähig ist
**dadurch gekennzeichnet**, daß als optischer Sender (S, S1, S2) ein Halbleiterlaser und als optischer Empfänger (E, E1, E2) eine Halbleiter-Photodiode verwendet ist, deren Betriebswellenlänge deutlich unterhalb der Grenzwellenlänge des Lichtwellenleiters (1), z. B. im 800 nm-Wellenlängenbereich, liegt, und daß der Laser (S, S1) derart an den Lichtwellenleiter angekoppelt ist, daß in ihm nur ein einziger Modus angeregt wird.

2. System nach Anspruch 1, dadurch gekennzeichnet, daß die Ankopplung des Lasers (2) an den Lichtwellenleiter (1) dadurch bewirkt ist, daß das Ende des Lichtwellenleiters, in das der Laser einstrahlen soll, an die lichtemittierende Fläche des Lasers (2) mittels eines Klebers (6) angeklebt ist (Fig. 2).

3. System nach Anspruch 1 oder 2, dadurch gekennzeichnet, daß der Lichtwellenleiter (1) im Wellenlängenmultiplex bidirektional betrieben ist und daß dabei als richtungstrennende/richtungsvereinigende Elemente Wellenlängenmultiplexer/-demultiplexer in Form von Faserschmelzkopplern (8, 9) verwendet sind (Fig. 3).

4. System nach Anspruch 3, dadurch gekennzeichnet, daß die beiden Wellenlängen für die beiden Übertragungsrichtungen 780 nm und 830 nm betragen.

5. System nach Anspruch 1, dadurch gekennzeichnet, daß ein zweiter optischer Sender (S2) und ein zweiter optischer Empfänger (E2) vorhanden sind, deren Betriebswellenlänge gleich der des ersten optischen Senders (S1) und optischen Empfängers (E1) und so gewählt ist, daß in dem Lichtwellenleiter (1) nur der Grundmodus LP₀₁ und der nächsthöhere Modus LP₁₁ ausbreitungsfähig sind und daß die optischen Sender (S1, S2) und optischen Empfänger (E1, E2) so an den Lichtwellenleiter (1) angekoppelt sind, daß zwei optische Signale undirektional oder bidirektional mit unterschiedlichen Moden übertragen werden (Fig. 4, Fig. 5).

6. System nach Anspruch 5, dadurch gekennzeichnet, daß der Lichtwellenleiter (1) bidirektional betrieben ist, daß am einen Ende des Lichtwellenleiters ein erster optischer Sender (S1) sein optisches Ausgangssignal im Grundmodus LP₀₁ in den Lichtwellenleiter einstrahlt und am anderen Ende ein zweiter optischer Sender (S2) sein optisches Ausgangssignal mit derselben Wellenlänge und ebenfalls im Grundmodus LP₀₁ in den Lichtwellenleiter einstrahlt, daß in den Lichtwellenleiter ein Modenkoppler (MK) eingefügt ist, der in jeder der beiden Übertragungsrichtungen das übertragene optische Signal vom Grundmodus LP₀₁ in den nächsthöheren Modus LP₁₁ umwandelt, daß vor jedem Ende des Lichtwellenleiters vor dem optischen Sender (S1, S2) ein Modenfilter (MF2, MF1) in den Lichtwellenleiter eingefügt ist, welches das zu diesem Ende übertragene im höheren Modus LP₁₁ vorliegende optische Signal aus dem Lichtwellenleiter (1) aus- und auf den zugehörigen optischen Empfänger (E2, E1) überkoppelt. (Fig. 4).

7. System nach Anspruch 5, dadurch gekennzeichnet, daß der Lichtwellenleiter (1) unidirektional betrieben ist, daß an das Ende des Lichtwellenleiters (1) ein erster und ein zweiter optischer Sender (S₁, S₂) angekoppelt sind, derart, daß das optische Ausgangssignal des ersten optischen Senders (S₁) im Grundmodus LP₀₁ in den Lichtwellenleiter (1) eingekoppelt wird und das optische Ausgangssignal des zweiten optischen Senders (S2) im Grundmodus LP₀₁ in ein einen Modenkoppler (MK) enthaltendes Lichtwellenleiter-Anschlußstück (20) eingekoppelt wird, in diesem in den nächsthöheren Modus LP₁₁ umgewandelt wird und in diesem Modus in den Lichtwellenleiter (1) eingekoppelt wird, daß am anderen Ende des Lichtwellenleiters (1) ein Modenfilter (MF) in den Lichtwellenleiter (1) eingefügt ist, welches das im Grundmodus LP₀₁ übertragene optische Signal sich über den Lichtwellenleiter bis zu einem ersten optischen Empfänger (E₁) weiter ausbreiten läßt und das im höheren Modus LP₁₁ übertragene optische Signal aus dem Lichtwellenleiter (1) aus- und auf einen zweiten optischen Empfänger(E2) überkoppelt (Fig. 5).

8. System nach Anspruch 6 oder 7, dadurch gekennzeichnet, daß das Modenfilter (MF1, MF2, MF) ein Lichtwellenleiterstück ist, dessen Durchmesser so gering ist, daß das im höheren Modus LP₁₁ übertragene optische Signal sich nicht weiter ausbreiten kann und in die Umgebung des Lichtwellenleiterstücks zum Empfang in dem dafür vorgesehenen Empfänger (E, E₁, E₂) abgestrahlt wird, wogegen das in dem Grundmodus LP₀₁ übertragene optische Signal in dem Lichtwellenleiterstück weitergeleitet wird.

## Claims

1. A broadband optical communication system, particularly for the subscriber area, comprising at least one optical transmitter, at least one optical receiver, and an optical waveguide in which only the fundamental mode can propagate above a cutoff wavelength, e.g., 1,280 nm,
**characterized in** that the optical transmitter (S, S1, S2) and the optical receiver (E, E1, E2) are a semiconductor laser and a semiconductor photodiode, respectively, whose operating wavelengths are clearly below the cutoff wavelength of the optical waveguide (1), e.g., in the 800-nm wavelength range, and that the laser (S, S1) is coupled to the optical waveguide in such a way that only a single mode will be excited in the waveguide.

2. A system as claimed in claim 1, characterized in that the coupling of the laser (2) to the optical waveguide (1) is accomplished by joining that end of the optical waveguide into which the laser light is to be coupled to the light-emitting surface of the laser (2) by means of an adhesive (6) (Fig. 2).

3. A system as claimed in claim 1 or 2, characterized in that the optical waveguide (1) is operated bidirectionally using wavelength-division multiplexing, and that wavelength-division multiplexer/demultiplexers in the form of fused-fiber directional couplers (8, 9) are used as direction-separating/direction-combining devices (Fig. 3).

4. A system as claimed in claim 3, characterized in that the two wavelengths for the two directions of transmission are 780 nm and 830 nm.

5. A system as claimed in claim 1, characterized in that there are provided a second optical transmitter (S2) and a second optical receiver (E2) whose operating wavelengths are equal to those of the first optical transmitter (S1) and the first optical receiver (E1), respectively, and are so chosen that only the fundamental mode LP₀₁ and the next higher-order mode LP₁₁ can propagate in the optical waveguide (1), and in that the optical transmitters (S1, S2) and the optical receivers (E1, E2) are coupled to the optical waveguide (1) in such a way that two optical signals are transmitted unidirectionally or bidirectionally in different modes (Fig. 4, Fig. 5).

6. A system as claimed in claim 5, characterized in that the optical waveguide (1) is operated bidirectionally, that at one end of the optical waveguide, the first optical transmitter (S1) couples its optical output signal into the optical waveguide in the fundamental mode LP₀₁, that at the other end, the second optical transmitter (S2) couples its optical output signal into the optical waveguide with the same wavelength and also in the fundamental mode LP₀₁, that the optical waveguide contains a modal coupler (MK) which converts the transmitted optical signal from the fundamental mode LP₀₁ to the next higher-order mode LP₁₁ in each of the two directions of transmission, and that in front of each end of the optical waveguide, i.e., in front of the respective optical transmitter (S1, S2), the optical waveguide contains a modal filter (MF2, MF1) which couples the optical signal transmitted to said end, which is present in the higher-order mode LP₁₁, from the optical waveguide (1) to the associated optical receiver (E2, E1) (Fig. 4).

7. A system as claimed in claim 5, characterized in that the optical waveguide (1) is operated unidirectionally, that the first optical transmitter (S₁) and the second optical transmitter (S₂) are coupled to the end of the optical waveguide (1) in such a manner that the optical output signal of the first optical transmitter (S₁) is coupled into the optical waveguide (1) in the fundamental mode LP₀₁, while the optical output signal of the second optical transmitter (S2) is coupled in the fundamental mode LP₀₁ into an optical-waveguide pigtail (20) containing a modal coupler (MK) which converts it to the next higher-order mode LP₁₁ and couples it into the optical waveguide (1) in this mode, that at the other end of the optical waveguide (1), the optical waveguide (1) contains a modal filter (MF) which allows the optical signal transmitted in the fundamental mode LP₀₁ to propagate along the optical waveguide up to the first optical receiver (E₁) and couples the optical signal transmitted in the higher-order mode LP₁₁ from the optical waveguide (1) to the second optical receiver (E2) (Fig. 5).

8. A system as claimed in claim 6 or 7, characterized in that the modal filter (MF1, MF2, MF) is a section of optical waveguide whose diameter is so small that the optical signal transmitted in the higher-order mode LP₁₁ cannot propagate any further and is radiated into the environment of the optical-waveguide section for reception by the receiver (E, E₁, E₂) intended therefor, whereas the optical signal transmitted in the fundamental mode LP₀₁ is transmitted through the optical-waveguide section.

## Revendications

1. Système optique à large bande de transmission d'informations, en particulier pour la partie de raccordement des abonnés, ayant au moins un émetteur optique, au moins un récepteur optique et un guide d'ondes optiques dans lequel, au-delà d'une longueur d'onde limite, par exemple 1 280 nm, seul le mode de base est susceptible de se propager, caractérisé en ce qu'on utilise comme émetteur optique (S, S1, S2) un laser à semi-conducteur et comme récepteur optique (E, E1, E2) une photodiode à semi-conducteur dont les longueurs d'onde de fonctionnement se situent nettement en-dessous de la longueur d'onde limite du guide d'ondes optiques (1), par exemple dans la gamme de longueurs d'onde de 800 nm, et en ce que le laser (S, S1) est couplé au guide d'ondes optiques d'une telle manière qu'un seul mode est excité dans ce dernier.

2. Système selon la revendication 1, caractérisé en ce que le couplage du laser (2) et du guide d'ondes optiques (1) est réalisé par collage de l'extrémité du guide d'ondes optiques vers laquelle le laser doit rayonner sur la surface à émission de lumière du laser (2) au moyen d'une colle (6) (figure 2).

3. Système selon la revendication 1 ou 2, caractérisé en ce que l'on fait fonctionner le guide d'ondes optiques (1) bidirectionnellement par multiplexage de longueurs d'onde et en ce que on utilise, comme élément de séparation/réunion de direction, des multiplexeurs/démultiplexeurs de longueurs d'onde constitués de coupleurs à fusion de fibre (8, 9) (figure 3).

4. Système selon la revendication 3, caractérisé en ce que les deux longueurs d'onde pour les deux directions de transmission sont 780 nm et 830 nm.

5. Système selon la revendication 1, caractérisé en ce qu'il présente un deuxième émetteur optique (S2) et un deuxième récepteur optique (E2) dont les longueurs d'onde de fonctionnement sont les mêmes que celles du premier émetteur optique (S1) et du premier récepteur optique (E1) et sont choisis de manière que, dans le guide d'ondes optiques (1), seul un mode de base LP₀₁ et le mode immédiatement supérieur LP₁₁ sont susceptibles de se propager, et en ce que les émetteurs optiques (S1, S2) et récepteurs optiques (E1, E2) sont couplés au guide d'ondes optiques (1) d'une telle manière que deux signaux optiques sont transmis, uni- ou bi-directionnellement avec des modes différents (figure 4, figure 5).

6. Système selon la revendication 5, caractérisé en ce qu'on fait fonctionner le guide d'ondes optiques (1) de façon bidirectionnelle, en ce que, à l'une des extrémités du guide d'ondes optiques un premier émetteur optique (S1) émet vers le guide d'ondes optiques son signal optique de sortie en mode de base LP₀₁ et à l'autre extrémité, un deuxième émetteur optique (S2) émet vers le guide d'ondes optiques son signal optique de sortie avec la même longueur d'onde et, également en mode de base LP₀₁, en ce qu'un coupleur de mode (MK) est disposé dans le guide d'ondes optiques, et transforme du mode de base LP₀₁ vers le mode immédiatement supérieur LP₁₁ le signal optique transmis dans chacune des deux directions de transmission, en ce qu'avant chaque extrémité du guide d'ondes optiques, avant l'émetteur optique (S1, S2), un filtre de mode (MF2, MF1) est disposé dans le guide d'ondes optiques et extrait du guide d'ondes optiques (1) le signal optique transmis à cette extrémité en mode supérieur LP₁₁ et couple ce signal vers le récepteur optique associé (E2, E1) (figure 4).

7. Système selon la revendication 5, caractérisé en ce qu'on fait fonctionner le guide d'ondes optiques (1) de façon unidirectionnelle, en ce qu'un premier et un deuxième émetteurs optiques (S1, S2) sont couplés à l'extrémité du guide d'ondes optiques (1) d'une telle manière que le signal optique de sortie du premier émetteur optique (S1) est couplé vers le guide d'ondes optiques (1) en mode de base LP₀₁ et que le signal optique de sortie du deuxième émetteur optique (S2) est couplé dans une section (20) de guide d'ondes optiques de raccordement qui contient un coupleur de mode (MK) et est transformé dans cette dernière dans le mode immédiatement supérieur LP₁₁, et est couplé dans ce mode dans le guide d'ondes optiques (1), en ce que, à l'autre extrémité du guide d'ondes optiques (1), un filtre de mode (MF) est disposé dans le guide d'ondes optiques (1) et laisse le signal optique transmis en mode de base LP₀₁ se propager sur le guide d'ondes optiques jusqu'à un premier récepteur optique (E1) ledit filtre de mode extrayant du guide d'ondes optiques (1) le signal optique transmis en mode supérieur LP₁₁ et le couplant vers un deuxième récepteur optique (E2) (figure 5).

8. Système selon la revendication 6 ou 7, caractérisé en ce que le filtre de mode (MF1, MF2, MF) est une section de guide d'ondes optiques dont le diamètre est réduit de telle sorte que le signal optique transmis en mode supérieur LP₁₁ ne peut s'y propager et est rayonné dans les environs de la section de guide d'ondes optiques pour être reçu par un récepteur (E, E1, E2) prévu à cette fin tandis que le signal optique transmis en mode de base, LP₀₁, est toujours transmis à travers la section de guide d'ondes optiques.
